# EUROPÄISCHE PATENTSCHRIFT

(11) **EP 1 173 495 B1**
(45) Veröffentlichungstag und Bekanntmachung des Hinweises auf die Patenterteilung: **22.01.2003**
(21) Anmeldenummer: 00917071.3
(22) Anmeldetag: 11.04.2000
(51) Int. Cl.: C08G 18/48, C08G 18/18

(54) **OFFENZELLIGE POLYURETHANHARTSCHAUMSTOFFE**
OPEN-CELL RIGID POLYURETHANE FOAMS
MOUSSES RIGIDES DE POLYURETHANNE A ALVEOLES OUVERTS

(30) Priorität: 24.04.1999 DE 19918726
(43) Veröffentlichungstag der Anmeldung: 23.01.2002
(73) Patentinhaber: Bayer Aktiengesellschaft, 51368 Leverkusen (DE)
(72) Erfinder: KLESCZEWSKI, Bert, D-40237 Düsseldorf (DE); HOFMANN, Jörg, D-47829 Krefeld (DE); GUPTA, Pramod, D-50181 Bedburg (DE)
(86) Internationale Anmeldenummer: EP0003218
(87) Internationale Veröffentlichungsnummer: WO00064958

(56) Entgegenhaltungen:
- EP-A- 0 369 487
- EP-A- 0 504 448
- US-A- 5 374 705
- US-A- 5 648 447
- US-A- 5 856 372

## Beschreibung

Die Erfindung betrifft offenzellige, Urethan- und/oder Isocyanuratgruppen und/oder Harnstoffgruppen aufweisende Hartschaumstoffe, die unter Verwendung einer langkettige Polyetherpolyole mit geringem Doppelbindungsgehalt enthaltenden Polyolkomponente hergestellt werden.

Polyurethanhartschäume werden im allgemeinen aus Polyolen mit im Mittel mindestens drei Hydroxylgruppen pro Molekül, mindestens difunktionellen Isocyanaten, Katalysatoren, Stabilisatoren, Treibmitteln und gegebenenfalls üblichen Zusatzstoffen hergestellt.

Als Polyolkomponente verwendet man im allgemeinen Polyetherpolyole oder Polyesterpolyole oder Mischungen derselben, wobei in der verwendeten Polyolmischung im Mittel mindestens drei Hydroxylgruppen je Molekül vorhanden sind und die Hydroxylzahl der verwendeten Polyolmischung zwischen 100 und 900 liegt.

Als Treibmittel werden beispielsweise flüchtige organische Verbindungen mit Siedepunkten unterhalb 60°C oder Wasser eingesetzt. Das Wasser reagiert mit der Isocyanatkomponente unter Bildung von Kohlendioxid und Amin, das wiederum mit der Isocyanatkomponente zu Polyharnstoff weiterreagiert.

Die entstehenden Hartschaumstoffe sind meistens vorwiegend geschlossenzellig mit einem Raumgewicht zwischen 5 und 950 kg m⁻³. Um offenzellige Hartschaumstoffe zu erhalten, werden Polyole mit einem erhöhten Gehalt an Oxyethylengruppen und/oder spezielle Silikonstabilisatoren und/oder Zusätze wie Caiciumstearat, Feststoffe oder fettchemische Derivate verwendet.

Offenzellige Hartschaumstoffe werden z. B. als hydrophiles Substrat zur Blumenaufzucht verwendet. Weitere Anwendungen für Hartschaumstoffe mit erhöhtem Gehalt an offenen Zellen sind Isolieranwendungen (hierzu werden die Bauteile gegebenenfalls evakuiert), Anwendungen als energieabsorbierendes Material, z. B. in Stoßstangen, oder Kraftfahrzeug-Innenraumanwendungen sowie für KFZ-Dachhimmel.

Neuere Entwicklungen auf dem Gebiet der Hartschaumstoffe betreffen die gezielte Herstellung von weitgehend offenzelligen, besonders feinzelligen Polyurethan- oder polyisocyanuratmodifizierten Polyurethanhartschaumstoffen. Diese können als Isoliermaterialien, z B. in Vakuumpaneelen verwendet werden.

In FR-A 1457824 wird die Herstellung von offenzelligen Hartschäumen unter Verwendung einer Polyetherpolyolmischung beschrieben, die einen erhöhten Anteil eines langkettigen Polyetherpolyols mit einer Hydroxylzahl zwischen 50 und 200 aufweist.

EP-A 622 388 beschreibt die Herstellung von offenzelligen Hartschäumen unter Verwendung eines langkettigen Polyetherpolyols, das eine Hydroxylzahl von 25 bis 60, maximal 5 % Oxyethylengruppen und maximal 5 % primäre Hydroxylendgruppen aufweist, in Kombination mit Wasser als alleinigem Treibmittel und einem Polyetherpolyol der Hydroxylzahl 150 bis 800, das maximal 5 % primäre Hydroxylendgruppen aufweist und ein polyfunktionelles Amin als Startermolekül aufweist.

Es wurde nun gefunden, daß auf einfache und gezielte Weise Urethan- und/oder Isocyanuratgruppen und/oder Harnstoffgruppen aufweisende Hartschäume mit einem erhöhten Gehalt an offenen Zellen hergestellt werden können, indem man in der verwendeten Polyolmischung Poly(oxyalkylen)polyole der Hydroxylzahl von 3 bis 90 einsetzt, die einen Gehalt an Kohlenstoff-Kohlenstoff-Doppelbindungen von weniger als 15 mmol·kg⁻¹ aufweisen.

Gegenstand der Erfindung sind überwiegend offenzellige, Urethan- und/oder Isocyanuratgruppen und/oder Harnstoffgruppen aufweisende Hartschaumstoffe. erhältlich durch Umsetzung von
a) Di- oder Polyisocyanaten mit
b) einer Polyolkomponente mit durchschnittlich mindestens zwei gegenüber Isocyanaten reaktiven Gruppen,
c) Wasser und/oder einem oder mehreren physikalischen Treibmitteln,
d) gegebenenfalls Katalysatoren,
e) gegebenenfalls weiteren Hilfs- und Zusatzstoffen,
dadurch gekennzeichnet, daß die Komponente b) mindestens ein Poly(oxyalkylen)-polyol enthält, das eine Hydroxylzahl von 3 bis 90, bevorzugt 3 bis 60 aufweist und nicht mehr als 15 mmol·kg⁻¹, bevorzugt nicht mehr als 12 mmol·kg⁻¹ Kohlenstoff-Kohlenstoff-Doppelbindungen enthält.

Als Komponente a) werden im erfindungsgemäßen Verfahren organische Di- oder Polyisocyanate verwendet. Als Di- oder Polyisocyanate kommen aliphatische, cycloaliphatische, araliphatische, aromatische und heterocyclische Polyisocyanate in Frage, wie sie in Justus Liebigs Annalen der Chemie 562(1949) 75 beschrieben werden, beispielsweise solche der Formel

Q(NCO)ₙ

in der
- n: eine ganze Zahl von 2 bis 4, vorzugsweise 2, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugt sind Polyisocyanate, wie sie in der DE-OS 28 32 253 beschrieben werden. Besonders bevorzugt eingesetzt werden in der Regel die technisch leicht zugänglichen Polyisocyanate, z.B. das 2,4- und 2.6-toluylendiisocyanat sowie beliebige Gemische dieser Isomeren ("TDI"), Polyphenyl-polymethylenpolyisocyanate, wie sie durch Anilin-Fonnaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4' - und/oder 2,4'-Diphenylmethandiisocyanat ableiten. Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1400. Ganz besonders bevorzugt finden die unter dem Namen "polymeres Diphenylmethandiisocyanat" technisch erhältlichen Polyisocyanate mit einer höheren Funktionalität als 2,0 sowie aus ihnen hergestellte Prepolymere Verwendung.

Erfindungsgemäß enthält die Polyolkomponente b) mindestens ein Poly(oxyalkylen)-polyol, das eine Hydroxylzahl von 3 bis 90, bevorzugt 3 bis 60 aufweist und nicht mehr als 15 mmol·kg⁻¹, bevorzugt nicht mehr als 12 mmol·kg⁻¹ Kohlenstoff-Kohlenstoff-Doppelbindungen enthält. Es können jedoch auch Gemische solcher Polyole eingesetzt werden. Bevorzugt weisen die Poly(oxyalkylen)polyole eine durchschnittliche Funktionalität von 2 bis 8, besonders bevorzugt 2 bis 6 auf. Der Anteil dieser Polyole in der Komponente b) beträgt bevorzugt 0,1 bis 50 Gew.-%, besonders bevorzugt 1 bis 30 Gew.-%.

Die erfindungsgemäß eingesetzten Poly(oxyalkylen)polyole können z. B. durch Polyaddition von Alkylenoxiden an polyfunktionelle Starterverbindungen in Gegenwart von Cäsium-, Rubidium-, Strontium- oder Bariumhydroxid oder alternativen basischen Katalysatoren hergestellt werden, oder indem in einem konventionell mittels Katalyse durch Alkalihydroxide oder -alkoxide hergestellten Polyol mit einem C-C-Doppelbindungsgehalt > 15 mmol·kg⁻¹ allylische C-C-Doppelbindungen zu propenylischen C-C-Doppelbindungen umgelagert und anschliessend mit Säure hydrolysiert werden. Bevorzugt werden die erfindungsgemäß eingesetzten Poly(oxyalkylen)polyolen mittels eines hochaktiven Doppelmetallcyanidkatalysators aus einer Starterverbindung mit durchschnittlich 2 bis 8, bevorzugt 2 bis 6 aktiven Wasserstoffatomen und einem oder mehreren Alkylenoxiden hergestellt, wie dies beispielsweise in EP-A 761 708 beschrieben ist.

Bevorzugte Starterverbindungen sind Moleküle mit zwei bis acht Hydroxylgruppen pro Molekül wie Wasser, Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, Sorbit und Saccharose. Weitere bevorzugte Starterverbindungen sind Ammoniak oder Verbindungen, die mindestens eine primäre oder sekundäre Aminogruppe aufweisen, wie beispielsweise aliphatische Amine wie 1,2-Diaminoethan, Oligomere des 1,2-Diaminoethans (beispielsweise Diethylentriamin, Triethylentetramin oder Pentaethylenhexamin), Ethanolamin oder Diethanolamin. 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan, aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensierung von Anilin mit Formaldehyd erhalten werden. Die Starterverbindungen können allein oder im Gemisch verwendet werden.

Besonders bevorzugt für die Umsetzung mit einem hochaktiven Doppelmetallcyanidkatalysator sind Starterverbindungen, die z. B. durch konventionelle Alkalikatalyse aus den zuvor genannten hydroxyfunktionellen niedermolekularen Starterverbindungen und Alkylenoxiden wie Oxiran. Methyloxiran und/oder Ethyloxiran gewonnen werden können.

Bevorzugt zur Herstellung der erfindungsgemäß eingesetzten Poly(oxyatkylen)-polyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670 f. zu entnehmen.

Das erfindungsgemäß eingesetzte Poly(oxalkylen)polyol kann auch eine Dispersion eines Polymerisationsprodukts in einem erfindungsgemäßen Poly(oxalkylen)polyol sein. Dieses Polymerisationsprodukt kann z.B. durch radikalische in- situ-Polymerisation von Acrylnitril und/oder Styrol in einem Poly(oxyalkylen)polyol hergestellt werden, z.B. nach der Methode der US-PS 3 523 093. Andere Polymerisationsprodukte sind z. B. Polyharnstoffverbindungen, Polyhydrazide oder tertiäre Aminogruppen enthaltende Polyurethane. Geeignete Methoden zur Herstellung von Dispersionen dieser Polymerisationsprodukte sind beispielsweise beschrieben in EP-A 11 752, US-PS 4 374 209 und DE-OS 32 31 497. Vorzugsweise beträgt der Anteil der Polymerisationsprodukte in der Dispersion 1 bis 50 Gew-%.

Die Polyolkomponente b) enthält neben den Poly(oxyalkylen)polyolen mit einer Hydroxylzahl von 3 bis 90, bevorzugt 3 bis 60 und einem Gehalt an C-C-Doppelbindungen von nicht mehr als 15 mmol·kg⁻¹, bevorzugt nicht mehr als 12 mmol·kg⁻¹ mindestens eine weitere Verbindung mit mindestens zwei gegenüber Isocyanaten reaktiven Wasserstoffatomen. Bevorzugt handelt es sich dabei um ein oder mehrere Polyol(e). Bevorzugt eingesetzte Polyole sind Polyether- und/oder Polyesterpolyole, wie sie z. B. in G. Oertel (Hrsg.): "Kunststoffhandbuch", Band VII, C. Hanser Verlag, 3. Aufl., München 1993, S.57-75 beschrieben sind.

Polyetherpolyole werden erhalten durch Polyaddition von Alkylenoxiden wie beispielsweise Oxiran, Methyloxiran, Ethyloxiran, Decyloxiran oder Phenyloxiran. vorzugsweise Methyloxiran, Ethyloxiran oder Oxiran an Starterverbindungen mit aktiven Wasserstoffatomen. Als Starterverbindungen werden beispielsweise Ammoniak oder Verbindungen verwendet, die mindestens eine primäre oder sekundäre Aminogruppe aufweisen, wie beispielsweise aliphatische Amine wie 1,2-Diaminoethan, Oligomere des 1,2-Diaminoethans (beispielsweise Diethylentriamin, Triethylentetramin oder Pentaethylenhexamin), Ethanolamin oder Diethanolamin. 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan, aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensation von Anilin mit Formaldehyd erhalten werden. Weitere geeignete Starterverbindungen sind solche mit zwei oder mehr Hydroxylendgruppen wie beispielsweise Wasser, Triethanolamin, 1,2-Ethandiol, 1,2-Propandiol,1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, Sorbit und Saccharose. Die Starterverbindungen können allein oder als Gemische verwendet werden. Erfindungsgemäß in der Polyolkomponente b) einsetzbare Polyetherpolyole weisen (zahlenmittlere) Molmassen von 150 bis 12500 g/mol, vorzugsweise von 200 bis 1500 g/mol auf.

Es können in der Polyolkomponente b) auch ein oder mehrere Polyesterpolyole mit (zahlenmittleren) Molmassen von 100 bis 30000 g/mol, bevorzugt 150 bis 10000 g/mol, besonders bevorzugt 200 bis 6000 g/mol aus aromatischen und/oder aliphatischen Dicarbonsäuren und mindestens zwei Hydroxylgruppen aufweisenden Polyolen eingesetzt werden. Beispiele für Dicarbonsäuren sind Phthalsäure, Isophthalsäure, Terephthalsäure, Fumarsäure, Maleinsäure, Azelainsäure, Glutarsäure, Adipinsäure, Korksäure, Scbacinsäure, Malonsäure und Bernsteinsäure. Es können die reinen Dicarbonsäuren sowie beliebige Mischungen daraus verwender werden. Anstelle der freien Dicarbonsäuren können auch die entsprechenden Dicarbonsäurederivate, wie z. B. Dicarbonsäuremono- oder -diester von Alkoholen mit ein bis vier Kohlenstoffatomen eingesetzt werden. Solche Ester entstehen beispielsweise bei der Recyclisierung von Polyesterabfällen. Es können als Säurekomponente auch Dicarbonsäureanhydride wie Phthalsäureanhydrid oder Maleinsäureanhydrid eingesetzt werden. Als Alkoholkomponente zur Veresterung werden vorzugsweise verwendet: Ethylenglykol, Diethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, Pentaerythrit bzw. Mischungen daraus. Es können auch Polyesterpolyole aus Lactonen, z.B. ε-Caprolacton oder Hydroxycarbonsäuren, z.B. ω-Hydroxycarbonsäuren, verwendet werden.

Die Polyolkomponente b) kann auch Polyetheresterpolyole enthalten, wie sie z.B. durch Reaktion von Phthalsäureanhydrid mit Diethylenglykol und nachfolgende Umsetzung mit Oxiran erhältlich sind.

Weitere Beispiele geeigneter Polyole, die in der Polyolkomponente b) enthalten sein können, sind polyfunktionelle Alkohole oder Amine oder Aminoalkohole oder Mischungen aus diesen sowie deren oxypropylierte und/oder oxyethylierte Folgeprodukte oder auch Polyesterpolyole, die durch Veresterung mehrfach funktioneller Alkohole mit mehrfach funktionellen Carbonsäuren erhalten werden.

Im erfindungsgemäßen Verfahren wird bevorzugt als Komponente c) Wasser als chemisches Treibmittel eingesetzt, das durch Reaktion mit Isocyanatgruppen Kohlendioxid als Treibgas liefert. Bevorzugt wird Wasser in einer Menge von 0,001-10 Gew.-%, bezogen auf die Menge an Komponente b), eingesetzt. In Komponente c) können auch nicht-brennbare physikalische Treibmittel wie z.B. Dichlormethan, Dichlormonofluormethan, Difluormethan, Trifluormethan, Difluorethan, 1,1,1,2-Tetrafluorethan, Tetrafluorethan (R 134 oder R 134a), 1,1,1,3.3.3-Hexafluorpropan (R 356), 1,1,1,3,3-Pentafluorpropan (R 245fa), Chlordifluorethane, 1,1-Dichlor-2,2,2-Trifluorethan, 2,2-Dichlor-2-fluorethan, Heptafluorpropan und Schwefelhexafluorid verwendet werden. Auch Gemische dieser Treibmittel sind verwendbar. Weitere geeignete Treibmittel sind Carbonsäuren wie Ameisensäure, Essigsäure, Oxalsäure und chemische Treibmittel, die im Verlauf des Schäumprozesses Gase freisetzen wie z. B. Azoverbindungen. Bevorzugt werden diese Treibmittel in Kombination mit Wasser eingesetzt.

Zur Herstellung der erfindungsgemäßen Hartschaumstoffe werden gegebenenfalls als Komponente d) Katalysatoren verwendet werden, die die Reaktion zwischen der Isocyanatkomponente a) und der Polyolkomponente b) beschleunigen. Beispiele für geeignete Katalysatoren sind organische Zinnverbindungen wie Zinn(II)salze organischer Carbonsäuren, z. B Zinn(II)acetat, Zinn(II)octoat, Zinn(II)ethylhexoat und Zinn(II)laurat und die Dialkylzinn(IV)salze z.B. Dibutylzinndiacetat, Dibutylzinndilaurat und Dioctylzinndiacetat. Weitere Beispiele für geeignete Katalysatoren sind Amine wie Triethylamin, Dimethylcyclohexylamin, Dimethylbenzylamin, Pentamethyldiethylentriamin, N,N,N',N'-Tetramethylbutandiamin, N-Methylmorpholin, Bis(dimethylaminoethyl)ether und Tris(dialkylaminoalkyl)-s-hexahydrotriazine. Bevorzugt enthält die Katalysatorkomponente d) mindestens ein aliphatisches Amin. Besonders bevorzugt enthält die Katalysatorkomponente d) N-(Dimethylaminoethyl)-N-methylethanolamin, das z.B. unter dem Handelsnamen Dabco® T (Fa. Air Products) kommerziell erhältlich ist Es kann auch eine Kombination mehrerer Katalysatoren verwendet werden.

Üblicherweise werden die Komponenten b), c) und d) vor dem Verschäumungsprozess vermischt. Dieses Gemisch weist bevorzugt eine durchschnittliche Funktionalität zwischen 3.0 und 6.0 und eine durchschnittlichen OH-Zahl zwischen 120 und 700 auf.

Bei der Herstellung der erfindungsgemäßen Hartschäume können gegebenenfalls weitere Hilfs- und Zusatzstoffe e) mit zugesetzt werden. Beispiele sind Flammschutzmittel wie beispielsweise Trikresylphosphat, Tris-(2-chlorethyl)phosphat, Tris-(2-chlorpropyl)phosphat, Tris-(2,3-dibrompropyl)phosphat. Tetrakis-(2-chlorethyl)ethylendiphosphat, Dimethylmethanphosphonat, Diethanolaminomethylphosphonsäurediethylester sowie halogenhaltige, flammschützend wirkende Polyole. Mitverwendet werden können auch Paraffine oder Fettalkohole oder Dimethylpolysiloxane sowie Pigmente oder Farbstoffe, ferner Stabilisatoren gegen Alterungs- und Witterungseinflüsse, Weichmacher wie Dioctylphthalat und fungistatisch und bakteriostatisch wirkende Substanzen sowie Füllstoffe wie Bariumsulfat, Kieselgur, Ruß oder Schlämmkreide. Diese werden meist der Polyolkomponente in Mengen von 0 bis 10 Gewichtsteilen, bevorzugt 0 bis 5 Gewichtsteilen zugesetzt. Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fungistatisch und bakteriostatisch wirksamen Substanzen sowie Einzelheiten über Verwendungs- und Wirkungsweise dieser Zusatzmittel sind in G. Oertel (Hrsg.):"Kunststoff-Handbuch", Band VII, Carl Hanser Verlag, 3. Auflage, München 1993, S.110-115 beschrieben.

Die erfindungsgemäßen, vorwiegend offenzelligen Hartschaumstoffe werden üblicherweise hergestellt, indem das Di- oder Polyisocyanat a) als eine Komponente und die übrigen Bestandteile in Mischung als die andere Komponente mittels einer geeigneten, üblicherweise maschinellen Einrichtung intensiv vermischt werden. Die Herstellung der Hartschaumstoffe kann sowohl kontinuierlich, etwa auf einer Transportbandanlage als auch diskontinuierlich erfolgen. Die Herstellung von Hartschaumstoffen ist dem Fachmann im Prinzip bekannt und beispielsweise in G. Oertel (Hrsg.):"Kunststoff-Handbuch", Band VII, Carl Hanser Verlag, 3. Auflage, München 1993, S.271-286 beschrieben.

Bevorzugt wird die Herstellung der weitgehend offenzelligen, Urethan- und/oder Isocyanuratgruppen und/oder Harnstoffgruppen aufweisenden Hartschaumstoffe so vorgenommen, daß der NCO/OH-Index, d.h. das stöchiometrische Verhältnis zwischen reaktiven Isocyanatgruppen und Hydroxylgruppen. zwischen 0.5 und 6,0 beträgt. Besonders bevorzugt beträgt der NCO/OH-Index 0.7 bis 1.5. Das Raumgewicht der entstehenden Formkörper beträgt bevorzugt 5 kg m⁻³ bis 500 kg m⁻³, besonders bevorzugt 10 kg m⁻³ bis 200 kg m⁻³. Die nach DIN ISO 4590-86 gemessene Offenzelligkeit der Formkörper beträgt mindestens 20 %: die Formkörper weisen keinen oder minimalen Schrumpf auf.

Gegenstand der Erfindung ist auch die Verwendung der erfindungsgemäßen Hartschaumstoffe als Zwischenschicht für Verbundelemente, als Füllsubstrate für Vakuumisolationspaneele und zum Ausschäumen von Hohlräumen von Kühlhäusern sowie im Containerbau, als hydrophiles Substrat zur Blumenaufzucht und als energieabsorbierendes Material, z. B. in Stoßstangen, oder Kraftfahrzeug-Innenraumanwendungen sowie fiir KFZ-Dachhimmel.

### Beispiele

In den Beispielen wurden folgende Rohstoffe verwendet:
- Polyol A:: Additionsprodukt von Methyloxiran an Saccharose/Propylenglykol mit einer Hydroxylzahl von 380
- Polyol B:: Additionsprodukt von Methyloxiran an Saccharose/Ethylenglykol mit einer Hydroxylzahl von 450
- Polyol C:: Additionsprodukt von Methyloxiran an Trimethylolpropan mit einer Hydroxylzahl von 870
- Polyol D:: Additionsprodukt von Methyloxiran an Ethylendiamin mit einer Hydroxylzahl von 625
- Polyol E:: Additionsprodukt von Oxiran an ein Umsetzungsprodukt aus Diethylenglykol und Phthalsäureanhydrid mit einer Hydroxylzahl von 300
- Polyol F:: Additionsprodukt von Methyloxiran an Glycerol mit einer Hydroxylzahl von 56 und einem Gehalt an C-C-Doppelbindungen von 27 mMol kg⁻¹
- Polyol G:: Additionsprodukt von Methyloxiran an Glycerol mit einer Hydroxylzahl von 56 und einem Gehalt an C-C-Doppelbindungen von 7,2 mMol kg⁻¹
- Isocyanat:: Polymeres Diphenylmethandiisocyant mit einem Isocyanatgruppengehalt von 31,4 Gew.-%
- Katalysator 1:: Dimethylcyclohexylamin
- Katalysator 2:: N-(Dimethylaminoethyl)-N-methylethanolamin
(Dabco® T, Air Products GmbH, D-45527 Hattingen)
- Stabilisator 1:: Silikonstabilisator (Tegostab® B-8466, Th. Goldschmidt AG, D-45127 Essen)
- Stabilisator 2:: Silikonstabilisator (Tegostab® B-8469, Th. Goldschmidt AG, D-45127 Essen)

Nach dem im Labormaßstab üblichen Verschäumungsverfahren wurden Probekörper mit der Grundfläche 5 cm x 5 cm und einer Schaumhöhe von etwa 100 cm hergestellt. Folgende Formulierungen kamen zum Einsatz:

| Beispiel Nr. | 1 | A* | 2 | B* | 3 | C* |
|---|---|---|---|---|---|---|
| Bestandteile/Massen-Tle | | | | | | |
| Polyol A | 45 | 45 | | | | |
| Polyol B | | | 40 | 40 | 40 | 40 |
| Polyol C | 15 | 15 | 30 | 30 | 30 | 30 |
| Polyol D | 15 | 15 | | | | |
| Polyol E | 10 | 10 | 10 | 10 | 10 | 10 |
| Polyol F | | 15 | | 20 | | 20 |
| Polyol G | 15 | | 20 | | 20 | |
| Katalysator 1 | | | | | 1,3 | 1,3 |
| Katalysator 2 | 1,2 | 1,2 | 1,7 | 1,7 | | |
| Stabilisator 1 | 2 | 2 | | | | |
| Stabilisator 2 | | | 2 | 2 | 2 | 2 |
| Wasser | 4 | 4 | 4 | 4 | 4 | 4 |
| | | | | | | |
| Isocyanat | 157 | 157 | 177 | 177 | 177 | 177 |
| Kennzahl (NCO/OH) | 110 | 110 | 110 | 110 | 110 | 110 |
| Rührzeit/s | 6 | 6 | 6 | 6 | 6 | 6 |
| Abbindezeit/s | 50 | 50 | 52 | 54 | 48 | 49 |
| | | | | | | |
| Rohdichte/kg m⁻³ | 51 | 49 | 54 | 51 | 55 | 51 |
| durchschnittliche Offenzelligkeit/% | 78 | 50 | 96 | 77 | 47 | 34 |

| | | | | | | |
|---|---|---|---|---|---|---|
| * Vergleichsbeispiel | | | | | | |

Die Offenzelligkeit wurden nach DIN ISO 4590-86 bestimmt.
Die erfindungsgemässen Beispiele belegen, dass bei Verwendung der erfindungsgemässen Polyolmischungen die Offenzelligkeit des entstehenden Hartschaums deutlich erhöht wird.

## Patentansprüche

1. Offenzellige, Urethan- und/oder Isocyanuratgruppen und/oder Harnstoffgruppen aufweisende Hartschaumstoffe, erhältlich durch Umsetzung von
a) Di- oder Polyisocyanaten mit
b) einer Polyolkomponente mit durchschnittlich mindestens zwei gegenüber Isocyanaten reaktiven Gruppen,
c) Wasser und/oder einem oder mehreren physikalischen Treibmitteln,
d) gegebenenfalls Katalysatoren,
e) gegebenenfalls weiteren Hilfs- und Zusatzstoffen,
**dadurch gekennzeichnet, daß** die Komponente b) mindestens ein Poly(oxyalkylen)polyol enthält, das eine Hydroxylzahl von 3 bis 90 aufweist und nicht mehr als 15 mmol·kg⁻¹ Kohlenstoff-Kohlenstoff-Doppelbindungen enthält.

2. Hartschaumstoffe gemäß Anspruch 1, deren Raumgewicht 5 bis 500 kg m⁻³ beträgt.

3. Verfahren zur Herstellung von überwiegend offenzelligen, Urethan- und/oder Isocyanuratgruppen und/oder Harnstoffgruppen aufweisenden Hartschaumstoffen, bei dem
a) Di- oder Polyisocyanate mit
b) einer Polyolkomponente mit durchschnittlich mindestens zwei gegenüber Isocyanaten reaktiven Gruppen,
c) Wasser und/oder einem oder mehreren physikalischen Treibmitteln.
d) gegebenenfalls Katalysatoren,
e) gegebenenfalls weiteren Hilfs- und Zusatzstoffen.
umgesetzt werden, **dadurch gekennzeichnet, daß** die Komponente b) mindestens ein Poly(oxyalkylen)polyol enthält, das eine Hydroxylzahl von 3 bis 90 aufweist und nicht mehr als 15 mmol·kg⁻¹ Kohlenstoff-Kohlenstoff-Doppelbindungen enthält.

4. Verfahren gemäß Anspruch 3, **dadurch gekennzeichnet, daß** als Katalysator N-(Dimethylaminoethyl)-N-methylethanolamin verwendet wird.

5. Verwendung von Hartschaumstoffen gemäß Anspruch 1 oder 2 als isolierendes Füllsubstrat für Vakuumpaneele oder als Isoliermaterial für Kühlmöbel oder zum Ausschäumen von Hohlräumen von Kühlhäusern sowie im Containerbau.

6. Verwendung von Hartschaumstoffen gemäß Anspruch 1 oder 2 als energieabsorbierendes Material in Kraftfahrzeugen.

7. Verwendung von Hartschaumstoffen gemäß Anspruch 1 oder 2 in Kraftfahrzeug-Innenraumanwendungen.

8. Verwendung von Hartschaumstoffen gemäß Anspruch 1 oder 2 als hydrophiles Substrat zur Blumenaufzucht.

## Claims

1. Open-cell rigid foams containing urethane and/or isocyanurate groups and/or urea groups, which may be obtained by reacting
a) di- or polyisocyanates with
b) a polyol component having on average at least two groups which are reactive towards isocyanates
c) water and/or one or more physical blowing agents
d) optionally catalysts
e) optionally further auxiliaries and additives,
**characterised in that** the component b) contains at least one poly(oxyalkylene)polyol which has an hydroxyl value from 3 to 90 and contains not more than 15 mmole·kg⁻¹ of carbon-carbon double bonds.

2. Rigid foams according to claim 1, the density of which is from 5 to 500 kg m⁻³.

3. A process for the preparation of predominantly open-cell rigid foams containing urethane and/or isocyanurate groups and/or urea groups, wherein
a) di- or polyisocyanates are reacted with
b) a polyol component having on average at least two groups which are reactive towards isocyanates
c) water and/or one or more physical blowing agents
d) optionally catalysts
e) optionally further auxiliaries and additives,
**characterised in that** the component b) contains at least one poly(oxyalkylene)polyol which has an hydroxyl value from 3 to 90 and contains not more than 15 mmole.kg⁻¹ of carbon-carbon double bonds.

4. A process according to claim 3, **characterised in that** the catalyst used is N-(dimethylaminoethyl)-N-methylethanolamine.

5. The use of rigid foams according to claim 1 or 2 as insulating filler substrate for vacuum panels or as insulation material for domestic refrigerators or for foam-filling cavities of cold stores and in container construction.

6. The use of rigid foams according to claim 1 or 2 as energy-absorbing material in motor vehicles.

7. The use of rigid foams according to claim 1 or 2 in motor vehicle interior applications.

8. The use of rigid foams according to claim 1 or 2 as hydrophilic substrate for flower cultivation.

## Revendications

1. Mousses rigides à cellules ouvertes, contenant des groupes uréthanne et/ou isocyanurate et/ou des groupes urée, obtenues par réaction de
a) des di- ou poly-isocyanates avec
b) un composant polyol contenant en moyenne au moins deux groupes réactifs avec les isocyanates,
c) de l'eau et/ou un ou plusieurs agents porogènes physiques,
d) le cas échéant des catalyseurs,
e) le cas échéant d'autres produits auxiliaires et additifs,
**caractérisées en ce que** le composant b) contient au moins un poly(oxyalkylène)polyol d'indice d'hydroxyle 3 à 90 avec au maximum 15 mmol/kg de doubles liaisons carbone-carbone.

2. Mousses rigides selon la revendication 1, dont la densité apparente va de 5 à 500 kg/m³.

3. Procédé pour la préparation de mousses rigides à cellules principalement ouvertes, contenant des groupes uréthanne et/ou isocyanurate et/ou des groupes urée, dans lequel on fait réagir
a) des di- ou poly-isocyanates avec
b) un composant polyol contenant en moyenne au moins deux groupes réactifs avec les isocyanates,
c) de l'eau et/ou un ou plusieurs agents porogènes physiques,
d) le cas échéant des catalyseurs,
e) le cas échéant d'autres produits auxiliaires et additifs,
**caractérisé en ce que** le composant b) contient au moins un poly(oxyalkylène)polyol d'indice d'hydroxyle 3 à 90, ne contenant pas plus de 15 mmol/kg de doubles liaisons carbone-carbone.

4. Procédé selon la revendication 3, **caractérisé en ce que** le catalyseur utilisé est la N-(diméthylaminoéthyl)-N-méthyléthanolamine.

5. Utilisation des mousses rigides selon la revendication 1 ou 2, en tant que substrat de remplissage isolant pour des panneaux sous vide ou en tant que matériau isolant pour des meubles de réfrigérateurs ou pour le remplissage par la mousse des espaces creux de chambres frigorifiques ou pour la construction de récipients.

6. Utilisation des mousses rigides selon la revendication 1 ou 2 en tant que matériau absorbant l'énergie dans des véhicules.

7. Utilisation des mousses rigides selon la revendication 1 ou 2 dans des parois de compartiment intérieur de véhicules.

8. Utilisation des mousses rigides selon la revendication 1 ou 2 en tant que substrat hydrophile pour la culture de fleurs.
